# EUROPÄISCHE PATENTANMELDUNG

(11) **EP 3 838 650 A1**
(43) Veröffentlichungstag der Anmeldung: **23.06.2021**
(21) Anmeldenummer: 20210159.8
(22) Anmeldetag: 27.11.2020
(51) Int. Cl.: B60L 3/00, B60L 3/04, H01H 39/00, H02H 3/08, H02H 3/087

(54) **SCHIENENFAHRZEUG**

(30) Priorität: 19.12.2019 DE 102019220099
(71) Anmelder: Siemens Mobility GmbH, 81739 München (DE)
(72) Erfinder: Eckert, Peter, 91058 Erlangen (DE); Glinka, Martin, 91054 Buckenhof (DE)

(57) **Zusammenfassung**

Die Erfindung bezieht sich auf ein Schienenfahrzeug (5). Erfindungsgemäß ist vorgesehen, dass das Schienenfahrzeug (5) zumindest einen mit einer pyrotechnischen Abschalteinrichtung (40) ausgestatteten und dadurch pyrotechnisch abschaltbaren elektrischen Strompfad (30) aufweist, und mit der pyrotechnischen Abschalteinrichtung (40) eine Steuereinrichtung (50) verbunden ist, die dazu ausgebildet ist, bei Vorliegen zumindest einer Abschaltbedingung die pyrotechnische Abschalteinrichtung (40) mit einem Auslösesignal (AS) auszulösen und den elektrischen Strompfad (30) zu unterbrechen.

## Beschreibung

Die Erfindung bezieht sich auf Schienenfahrzeuge, die mit elektrischen Komponenten ausgestattet sind.

Der Erfindung liegt die Aufgabe zugrunde, ein Schienenfahrzeug anzugeben, bei dem elektrische Strompfade bei Vorliegen von Abschaltbedingungen besonders schnell und zuverlässig sowie mit geringem Aufwand abgeschaltet werden können.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Schienenfahrzeugs sind in Unteransprüchen angegeben.

Danach ist erfindungsgemäß vorgesehen, dass das Schienenfahrzeug zumindest einen mit einer pyrotechnischen Abschalteinrichtung ausgestatteten und dadurch pyrotechnisch abschaltbaren elektrischen Strompfad aufweist und mit der pyrotechnischen Abschalteinrichtung eine Steuereinrichtung verbunden ist, die dazu ausgebildet ist, bei Vorliegen zumindest einer Abschaltbedingung die pyrotechnische Abschalteinrichtung mit einem Auslösesignal auszulösen und den elektrischen Strompfad zu unterbrechen.

Ein wesentlicher Vorteil des erfindungsgemäßen Schienenfahrzeugs ist darin zu sehen, dass sich durch die erfindungsgemäß vorgesehene pyrotechnische Abschalteinrichtung der elektrische Strompfad besonders schnell, zuverlässig und mit geringem Teileaufwand abschalten lässt.

Vorteilhaft ist es, wenn die Abschalteinrichtung eine Sprengsicherung ist oder umfasst, bei der durch Zündung einer pyrotechnischen Ladung ein Teil des stromführenden Materials innerhalb der Sicherung so verformt wird, dass eine Unterbrechung des Strompfades eintritt.

Alternativ oder zusätzlich kann vorgesehen sein, dass bei der Sprengsicherung durch Zündung der pyrotechnischen Ladung ein bewegliches Teil innerhalb der Sicherung so bewegt, insbesondere verschwenkt, wird, dass eine Unterbrechung des Strompfades eintritt.

Durch zumindest ein zusätzliches Hilfsmittel, insbesondere Silikonöl oder Borsäure, innerhalb der Abschalteinrichtung wird vorzugsweise ein bei Unterbrechung des Strompfades entstehender Lichtbogen gelöscht.

Bei einer als vorteilhaft angesehenen Ausführungsvariante ist vorgesehen, dass die Steuereinrichtung an den pyrotechnisch abschaltbaren elektrischen Strompfad angekoppelt ist und diesem Energie entnimmt oder zumindest entnehmen kann und das Auslösesignal mit Energie erzeugt wird, die sie aus dem abschaltbaren elektrischen Strompfad entnimmt.

Alternativ oder zusätzlich kann in vorteilhafter Weise vorgesehen sein, dass die Steuereinrichtung zur Energieversorgung direkt oder über eine potentialtrennende Einrichtung an eine andere Energiequelle, insbesondere ein elektrisches Bordnetz des Schienenfahrzeugs, angeschlossen ist.

Die Steuereinrichtung ist bei einer als vorteilhaft angesehenen Ausführungsvariante ausschließlich durch elektrisch analoge Komponenten gebildet.

Auch kann in vorteilhafter Weise vorgesehen sein, dass die Steuereinrichtung ausschließlich durch passive Komponenten gebildet ist.

Alternativ oder zusätzlich kann in vorteilhafter Weise vorgesehen sein, dass die Steuereinrichtung eine digitale Recheneinrichtung aufweist und die zumindest eine Abschaltbedingung auf digitalem Wege prüft.

Vorteilhaft ist es beispielsweise, wenn die Steuereinrichtung an einer Schnittstelle eine Information in Form eines Signals (z. B. elektrisch, per Funk und/oder optisch z. B. via Lichtwellenleiter) zur Verarbeitung empfangen kann und auf deren Basis die Abschaltung auslöst.

Der pyrotechnisch abschaltbare elektrische Strompfad ist vorzugsweise in einem mit Gleichspannung beaufschlagten Gleichstrompfad des Schienenfahrzeugs angeordnet.

Bei einer als vorteilhaft angesehenen Ausführungsvariante ist vorgesehen, dass das Schienenfahrzeug einen elektrischen Ladungsspeicher aufweist, der über den zumindest einen pyrotechnisch abschaltbaren elektrischen Strompfad mit einer anderen elektrischen Komponente des Schienenfahrzeugs in Verbindung steht.

Vorteilhaft ist es insbesondere, wenn der Ladungsspeicher eine Traktionsbatterie ist, die elektrische Energie zum Speisen eines elektrischen Antriebsmotors speichern kann, und der zumindest eine pyrotechnisch abschaltbare elektrische Strompfad elektrisch zwischen der Traktionsbatterie und dem Antriebsmotor angeordnet ist.

Auch kann in vorteilhafter Weise vorgesehen sein, dass zwischen der Traktionsbatterie und dem elektrischen Antriebsmotor elektrisch ein Stromrichter angeordnet ist und der zumindest eine pyrotechnisch abschaltbare elektrische Strompfad elektrisch zwischen der Traktionsbatterie und dem Stromrichter angeordnet ist.

Bei einer anderen als vorteilhaft angesehenen Ausführungsvariante ist vorgesehen, dass das Schienenfahrzeug einen elektrischen Stromabnehmer aufweist, der über den zumindest einen pyrotechnisch abschaltbaren elektrischen Strompfad oder einen anderen pyrotechnisch abschaltbaren elektrischen Strompfad mit einer anderen elektrischen Komponente des Schienenfahrzeugs in Verbindung steht, und der zumindest eine pyrotechnisch abschaltbare elektrische Strompfad elektrisch zwischen dem Stromabnehmer und der anderen Komponente angeordnet ist.

Bei einer wiederum anderen als vorteilhaft angesehenen Ausführungsvariante ist vorgesehen, dass das Schienenfahrzeug ein elektrisches Bordnetz aufweist und der zumindest eine pyrotechnisch abschaltbare elektrische Strompfad oder ein anderer pyrotechnisch abschaltbarer elektrischer Strompfad elektrisch zwischen dem Bordnetz und einer mit dem Bordnetz in Verbindung stehenden elektrischen Komponente des Schienenfahrzeugs angeordnet ist.

Die Steuereinrichtung ist vorzugsweise derart ausgestaltet, dass sie ein Auslösesignal zum Auslösen der pyrotechnischen Abschalteinrichtung erzeugt, wenn der Strom im Strompfad oder eine von dem Strom im Strompfad abhängige Messgröße zumindest eine vorgegebene, bevorzugt stromabhängige, Auslösebedingung erfüllt.

Die Steuereinrichtung wird das Auslösesignal vorzugsweise erzeugen, wenn ein den Strom im Strompfad beschreibender Messwert einen vorgegebenen Schwellenwert überschreitet.

Alternativ oder zusätzlich kann die Steuereinrichtung das Auslösesignal erzeugen, wenn ein Integral, das durch Integrieren eines den Strom im Strompfad beschreibenden Messwerts über der Zeit gebildet wird, einen vorgegebenen Schwellenwert überschreitet.

Alternativ oder zusätzlich kann die Steuereinrichtung das Auslösesignal erzeugen, wenn ein Integral, das durch Integrieren des Quadrats eines den Strom im Strompfad beschreibenden Messwerts über der Zeit gebildet wird, einen vorgegebenen Schwellenwert überschreitet.

Alternativ oder zusätzlich kann die Steuereinrichtung das Auslösesignal erzeugen, wenn eine andere Vorrichtung des Schienenfahrzeugs, z. B. ein Stromrichter, eine fehlerhafte Situation erkennt, die eine Auslösung sinnvoll erscheinen lässt oder notwendig macht.

Alternativ oder zusätzlich kann die Steuereinrichtung das Auslösesignal erzeugen, wenn eine berechtigte Person, z. B. der Triebfahrzeugführer innerhalb des Fahrzeugs oder ein Feuerwehrmann außerhalb des Fahrzeugs, eine fehlerhafte Situation erkennt, die die Auslösung sinnvoll erscheinen lässt oder notwendig macht und diese durch Erzeugen einer entsprechenden Information beispielsweise in Form eines elektrischen Signals, z. B. über einen Notaus-Taster, signalisiert.

Die Erfindung wird nachfolgend anhand von Ausführungsbeispielen näher erläutert; dabei zeigen beispielhaft:
- Figur 1: in einer schematischen Ansicht Bestandteile eines Ausführungsbeispiels für ein erfindungsgemäßes Schienenfahrzeug, das mit einer pyrotechnischen Abschalteinrichtung und einer Steuereinrichtung für die pyrotechnische Abschalteinrichtung ausgestattet ist,
- Figur 2: ein Ausführungsbeispiel für die pyrotechnische Abschalteinrichtung gemäß Figur 1 vor einem Auslösen einer pyrotechnischen Ladung der Abschalteinrichtung,
- Figur 3: ein Ausführungsbeispiel für ein Trennelement für die pyrotechnische Abschalteinrichtung gemäß Figur 2, das durch Deformation in eine Trennstellung gebracht wird,
- Figur 4: ein Ausführungsbeispiel für ein Trennelement für die pyrotechnische Abschalteinrichtung gemäß Figur 2, das durch Verschwenken in eine Trennstellung gebracht wird,
- Figur 5: ein Ausführungsbeispiel für eine Energieversorgung der Steuereinrichtung gemäß Figur 1, wobei die Energieversorgung mittels eines Bordnetzes des Schienenfahrzeugs erfolgt,
- Figur 6: ein Ausführungsbeispiel für eine Energieversorgung der Steuereinrichtung gemäß Figur 1, wobei die Energieversorgung mittels eines Bordnetzes über eine zwischengeschaltete Potentialtrenneinrichtung erfolgt,
- Figur 7: ein Ausführungsbeispiel für eine Energieversorgung der Steuereinrichtung gemäß Figur 1, wobei die Energieversorgung mittels eines Stromwandlers erfolgt, der an den mit der pyrotechnischen Abschalteinrichtung ausgestatteten Strompfad angeschlossen ist,
- Figur 8: ein Ausführungsbeispiel für die Versorgung der Steuereinrichtung gemäß Figur 1 mit einer oder mehreren Informationen, wobei eine Information mittels eines Stromsensors erzeugt wird, der an den mit der pyrotechnischen Abschalteinrichtung ausgestatteten Strompfad angeschlossen ist,
- Figur 9: ein Ausführungsbeispiel für die Versorgung der Steuereinrichtung gemäß Figur 1 mit einer oder mehreren Informationen, wobei eine Information mittels eines Stromsensors erzeugt wird, der an einer anderen Leitung als den Strompfad angeschlossen ist,
- Figur 10: ein erstes Ausführungsbeispiel für die Steuereinrichtung gemäß Figur 1 näher im Detail,
- Figur 11: ein zweites Ausführungsbeispiel für die Steuereinrichtung gemäß Figur 1 näher im Detail, und
- Figur 12: ein drittes Ausführungsbeispiel für die Steuereinrichtung gemäß Figur 1 näher im Detail.

In den Figuren werden der Übersicht halber für identische oder vergleichbare Komponenten stets dieselben Bezugszeichen verwendet.

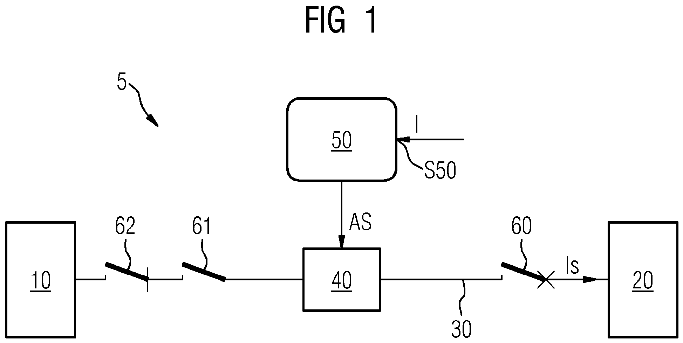

Die Figur 1 zeigt Bestandteile eines erfindungsgemäßen Schienenfahrzeugs 5 in einer schematischen Darstellung. Man erkennt zwei Schienenfahrzeugkomponenten 10 und 20, die mittels eines elektrischen Strompfades 30 elektrisch miteinander in Verbindung stehen. Der Strompfad 30 ist mit einer pyrotechnischen Abschalteinrichtung 40 ausgestattet, die mit einer Steuereinrichtung 50 in Verbindung steht und von dieser mittels eines Auslösesignals AS ausgelöst werden kann, um den elektrischen Strompfad 30 zu unterbrechen.

Die Steuereinrichtung 50 ist mit einer Schnittstelle S50 ausgestattet, an der eingangsseitig eine Information I eingespeist werden kann. Die Steuereinrichtung 50 erzeugt das Auslösesignal AS, wenn die Information I oder die eingangsseitig anliegenden Informationen zumindest eine Abschaltbedingung erfüllen.

Der Strompfad 30 kann zusätzlich zu der pyrotechnischen Abschalteinrichtung 40 mit weiteren Schaltkomponenten ausgestattet sein, beispielsweise mit bei Kurzschluss auslösenden Leistungsschaltern 60, betriebliche Ströme schaltenden Schaltelementen 61 und/oder elektrischen Trennelementen 62. Die letztgenannten Komponenten 60, 61 und 62 können, müssen aber nicht vorhanden sein.

Die beiden Schienenfahrzeugkomponenten 10 und 20 können zusätzlich zu dem in der Figur 1 gezeigten Strompfad 30 mit weiteren vergleichbaren Strompfaden oder anderen Leitern verbunden sein, die aus Gründen der Übersicht in der Figur 1 nicht weiter dargestellt sind.

Der Strompfad 30 kann mit einer Gleichspannung beaufschlagt sein und einen Gleichstrompfad zwischen den beiden Schienenfahrzeugkomponenten 10 und 20 bilden. Alternativ kann der Strompfad 30 auch mit einer Wechselspannung beaufschlagt sein und einen Wechselstrompfad zwischen den beiden Schienenfahrzeugkomponenten 10 und 20 bilden.

Bei der ersten Schienenfahrzeugkomponente 10 kann es sich beispielsweise um einen Ladungsspeicher, insbesondere eine Traktionsbatterie handeln. In diesem Falle wird die zweite Schienenfahrzeugkomponente 20 beispielsweise durch einen Antriebsmotor des Schienenfahrzeugs 5 gebildet, der von der Energie der ersten Schienenfahrzeugkomponente 10 gespeist wird. Alternativ kann es sich bei der zweiten Schienenfahrzeugkomponente 20 auch um einen Stromrichter handeln, der zwischen die als Ladungsspeicher ausgebildete erste Schienenfahrzeugkomponente 10 und einen von dieser über den Stromrichter gespeisten Antriebsmotor geschaltet ist.

Auch ist es möglich, dass die erste Schienenfahrzeugkomponente 10 durch einen Stromabnehmer des Schienenfahrzeugs 5 gebildet ist; in diesem Fall wird die zweite Schienenfahrzeugkomponente 20 vorzugsweise durch eine andere Komponente des Schienenfahrzeugs 5 gebildet, die von dem Stromabnehmer gespeist wird.

Auch ist es möglich, dass es sich bei der ersten Schienenfahrzeugkomponente 10 um ein Bordnetz handelt, das über den Strompfad 30 als zweite Schienenfahrzeugkomponente 20 eine beliebige andere Komponente des Schienenfahrzeugs 5 speist.

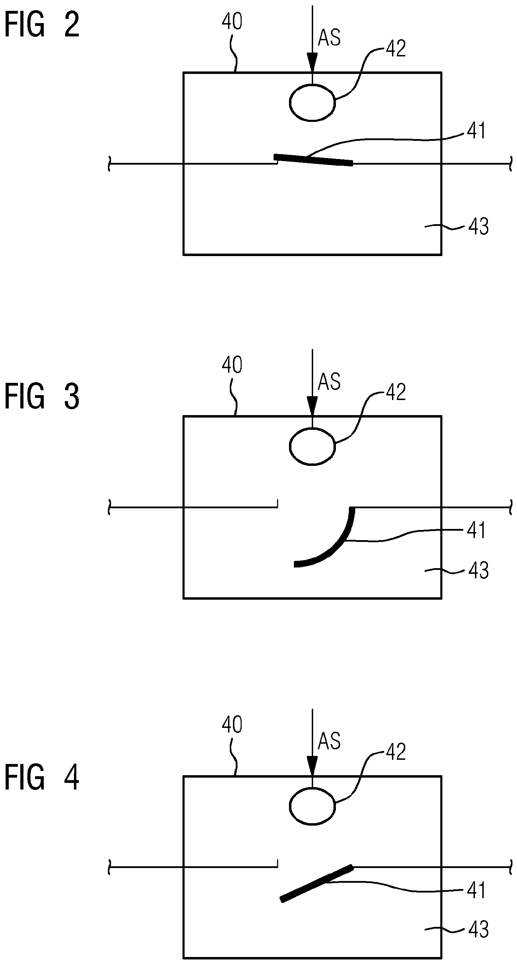

Die Figur 2 zeigt in einer schematischen Darstellung ein Ausführungsbeispiel für eine pyrotechnische Abschalteinrichtung 40, die bei der elektrischen Anordnung gemäß Figur 1 eingesetzt werden kann. Die pyrotechnische Abschalteinrichtung 40 gemäß Figur 2 weist ein Trennelement 41 auf, das sich bei der Darstellung gemäß Figur 2 im geschlossenen Zustand befindet und somit den Strompfad 30 schließt.

Die pyrotechnische Abschalteinrichtung 40 ist darüber hinaus mit einer pyrotechnischen Ladung 42 ausgestattet, die bei Vorliegen des Auslösesignals AS gezündet wird und durch eine pyrotechnische Reaktion, insbesondere eine Explosion bzw. Sprengung der pyrotechnischen Ladung 42, das Trennelement 41 in eine Trennstellung bzw. geöffnete Stellung bringt, in der der Strompfad 30 unterbrochen ist.

Die Figur 3 zeigt ein Ausführungsbeispiel für ein Trennelement 41 für eine pyrotechnische Abschalteinrichtung 40, das bei Auslösen der pyrotechnischen Ladung 42 verbogen wird und durch das Verbiegen seine Trennstellung einnimmt.

Die Figur 4 zeigt ein anderes Ausführungsbeispiel für ein Trennelement 41 für eine pyrotechnische Abschalteinrichtung 40, das nach Auslösen der pyrotechnischen Ladung 42 verschwenkt wird und durch Verschwenken seine Trennstellung einnimmt.

Auch ist es möglich, dass das Trennelement 41 nach Auslösen der pyrotechnischen Ladung 42 sowohl verbogen, wie in Figur 3 gezeigt, als auch verschwenkt, wie in Figur 4 gezeigt, wird.

Vorteilhaft ist es, wenn durch zumindest ein zusätzliches Hilfsmittel 43, insbesondere Silikonöl oder Borsäure, innerhalb der Abschalteinrichtung 40 ein bei Unterbrechung des Strompfads 30 entstehender Lichtbogen gelöscht wird.

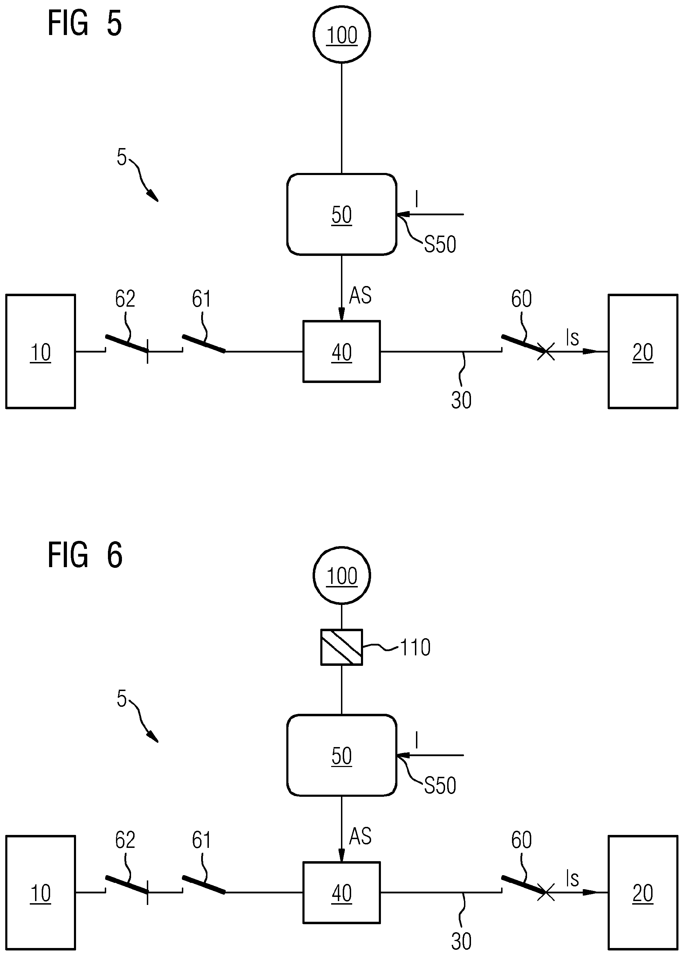

Im Zusammenhang mit den Figuren 5 bis 7 werden nachfolgend Ausführungsbeispiele erläutert, wie die Steuereinrichtung 50 gemäß Figur 1 mit Energie versorgt werden kann:
Die Figur 5 zeigt die Anordnung gemäß Figur 1 im Falle, dass die Steuereinrichtung 50 direkt bzw. unmittelbar mit einem Bordnetz 100 des Schienenfahrzeugs 5 verbunden ist und von diesem Bordnetz 100 mit Energie versorgt wird. Mit der Energie des Bordnetzes 100 kann die Steuereinrichtung 50 das Auslösesignal AS erzeugen, wenn eine an der Schnittstelle S50 anliegende Information I die bereits angesprochene zumindest eine Abschaltbedingung erfüllt.

Die Figur 6 zeigt eine andere Ausführungsvariante für das Versorgen der Steuereinrichtung 50 mit externer Energie. Bei dem Ausführungsbeispiel gemäß Figur 6 steht die Steuereinrichtung 50 mittels einer Potentialtrenneinrichtung 110 mit einem Bordnetz 100 des Schienenfahrzeugs 5 in Verbindung und wird unter Einbezug der Potentialtrenneinrichtung 110 mit Energie des Bordnetzes 100 versorgt. Im Übrigen gelten die obigen Erläuterungen im Zusammenhang mit der Figur 5 entsprechend.

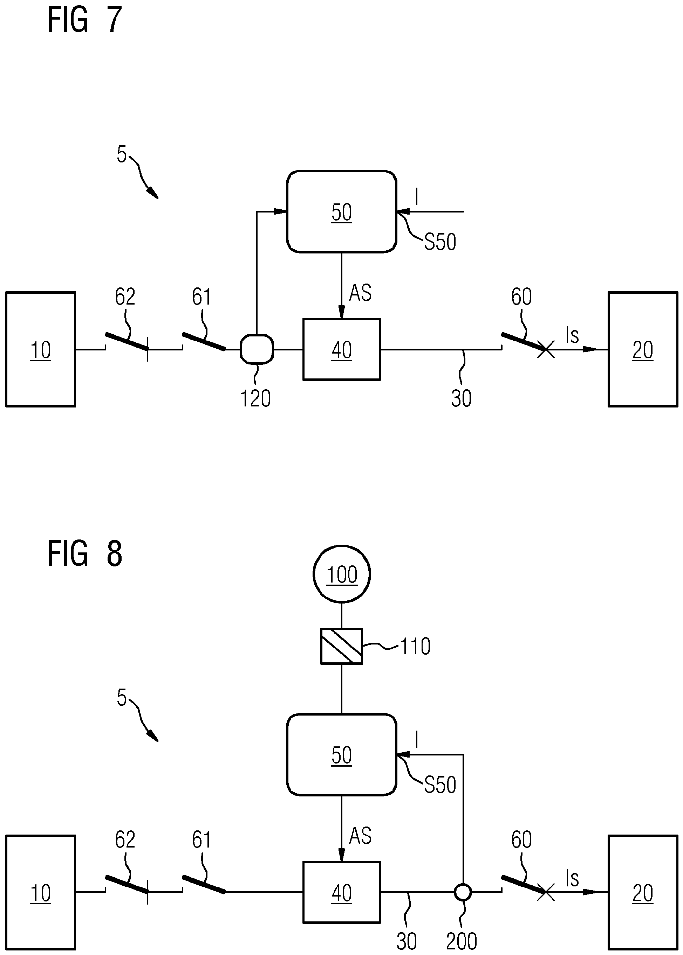

Die Figur 7 zeigt eine Ausführungsvariante der Anordnung gemäß Figur 1, bei der die Steuereinrichtung 50 Energie über einen Stromwandler 120 erhält, der an den Strompfad 30 angeschlossen ist. Bei dieser Ausführungsvariante bedarf es somit keiner weiteren bzw. externen Speisung der Steuereinrichtung 50 mit Energie.

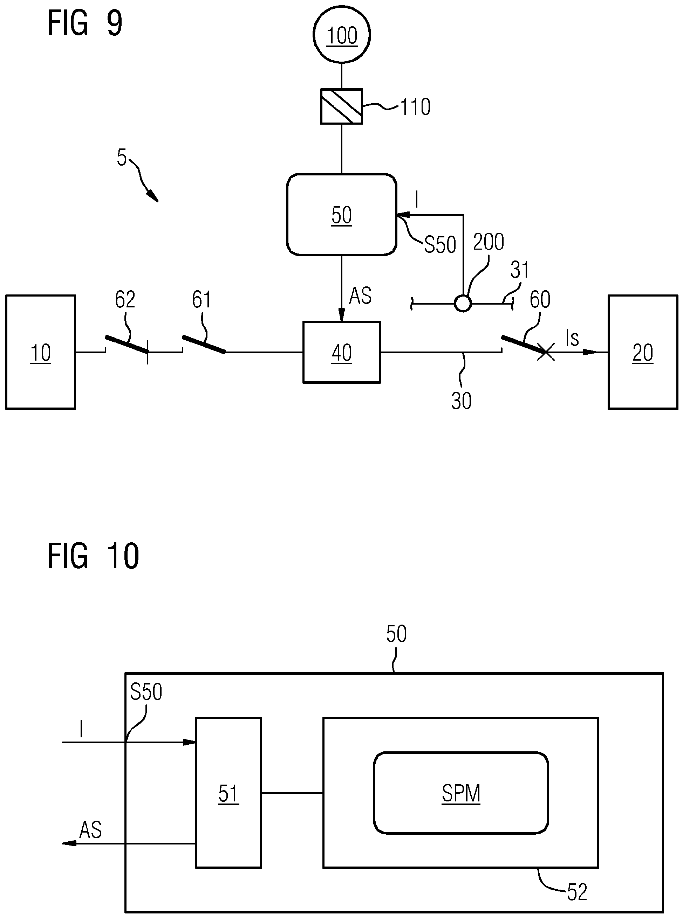

Im Zusammenhang mit den Figuren 8 und 9 werden nachfolgend Ausführungsvarianten für die Anordnung gemäß Figur 1 bezüglich des Erzeugens einer Information I für die Schnittstelle S50 der Steuereinrichtung 50 erläutert:
Die Figur 8 zeigt ein Ausführungsbeispiel, bei dem die Steuereinrichtung 50 mittels eines Stromsensors 200 an den Strompfad 30 angekoppelt ist und von dem Stromsensor 200 eine den Strom Is im Strompfad 30 angebende, insbesondere dazu proportionale, Messgröße oder einen entsprechenden Messwert als Information I erhält. Die Steuereinrichtung 50 kann in Abhängigkeit von der eingangsseitig anliegenden Information I das Auslösesignal AS erzeugen, beispielsweise wenn
- ein den Strom Is im Strompfad 30 beschreibender Messwert einen vorgegebenen Schwellenwert überschreitet und/oder
- ein Integral, das durch Integrieren eines den Strom Is im Strompfad 30 beschreibenden Messwerts über der Zeit gebildet wird, einen vorgegebenen Schwellenwert überschreitet, und/oder
- ein Integral, das durch Integrieren des Quadrats eines den Strom Is im Strompfad 30 beschreibenden Messwerts über der Zeit gebildet wird, einen vorgegebenen Schwellenwert überschreitet.

Die Figur 9 zeigt eine Ausführungsvariante des Ausführungsbeispiels gemäß Figur 8. Bei der Ausführungsvariante gemäß Figur 9 ist der Stromsensor 200 nicht an den Strompfad 30 angeschlossen, sondern an eine andere Leitung 31, die die beiden Schienenfahrzeugkomponenten 10 und 20 verbinden kann oder eine andere Funktion innerhalb des Schienenfahrzeugs 5 ausüben kann. Bei der Ausführungsvariante gemäß Figur 9 erzeugt die Steuereinrichtung 50 das Auslösesignal AS also in Abhängigkeit von Strom, der in dieser anderen Leitung 31 fließt. Im Übrigen gelten die obigen Erläuterungen entsprechend.

Im Zusammenhang mit den Figuren 10 bis 12 werden nachfolgend Ausführungsbeispiele für Steuereinrichtungen erläutert, die als Steuereinrichtung 50 bei den Anordnungen gemäß den Figuren 1 bis 9 eingesetzt werden können:
Die Figur 10 zeigt ein Ausführungsbeispiel für eine Steuereinrichtung 50, die eine Recheneinrichtung 51 und einen Speicher 52 umfasst. In dem Speicher 52 ist ein Steuerprogrammmodul SPM abgespeichert, das bei Ausführung durch die Recheneinrichtung 51 eine oder mehrere eingangsseitig, beispielsweise an einer Schnittstelle S50 der Steuereinrichtung 50, anliegende Informationen I auswertet und in Abhängigkeit von den eingangsseitig anliegenden Informationen I das Auslösesignal AS erzeugt, wenn zumindest eine Abschaltbedingung erfüllt ist. Beispielsweise kann die Recheneinrichtung 51 der Steuereinrichtung 50 das Auslösesignal AS erzeugen, wenn
- ein den Strom Is im Strompfad 30 beschreibender Messwert einen vorgegebenen Schwellenwert überschreitet und/oder
- ein Integral, das durch Integrieren eines den Strom Is im Strompfad 30 beschreibenden Messwerts über der Zeit gebildet wird, einen vorgegebenen Schwellenwert überschreitet, und/oder
- ein Integral, das durch Integrieren des Quadrats eines den Strom Is im Strompfad 30 beschreibenden Messwerts über der Zeit gebildet wird, einen vorgegebenen Schwellenwert überschreitet und/oder
- wenn eine andere Vorrichtung im Schienenfahrzeug 5, z. B. ein Stromrichter, eine fehlerhafte Situation erkennt und/oder
- wenn eine berechtigte Person, z. B. der Triebfahrzeugführer innerhalb des Schienenfahrzeugs 5 oder ein Feuerwehrmann außerhalb des Schienenfahrzeugs 5, eine fehlerhafte Situation erkennt und diese der Steuereinrichtung 50 signalisiert.

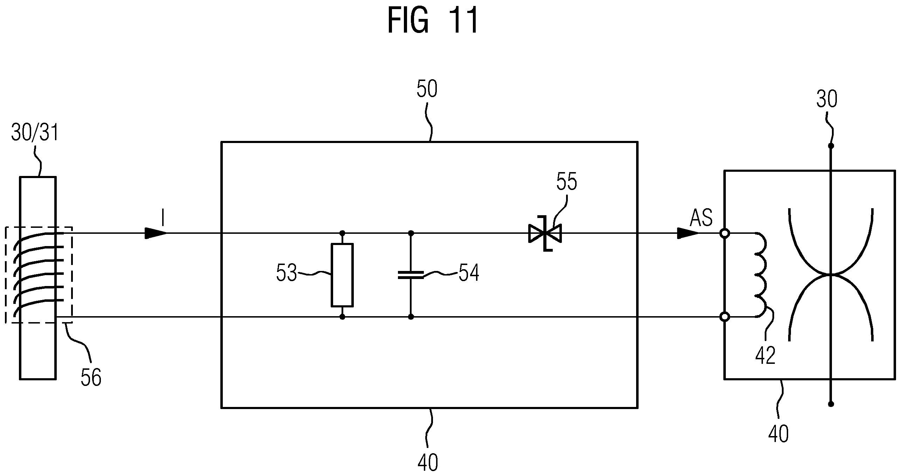

Die Figur 11 zeigt ein weiteres Ausführungsbeispiel für eine Steuereinrichtung, die als Steuereinrichtung 50 bei den Ausführungsbeispielen gemäß den Figuren 1 bis 9 eingesetzt werden kann.

Bei der Ausführungsvariante gemäß Figur 11 besteht die Steuereinrichtung 50 ausschließlich aus passiven analogen Elementen, beispielsweise einem Widerstand 53, einer Kapazität 54 und einer Zenerdiode 55. Die genannten Komponenten 53, 54 und 55 stehen mittels eines induktiven Koppelelements 56, bei dem es sich um eine Spule, beispielsweise eine Rogowski-Spule, handeln kann, mit dem Strompfad 30 gemäß Figur 1 oder dem anderen Leiter 31 gemäß Figur 9 in Verbindung.

Das induktive Koppelelement 56 hat bei dem Ausführungsbeispiel gemäß Figur 11 eine Doppelfunktion: Zum einen arbeitet das Koppelelement 56 als Stromsensor 200 gemäß Figur 8 und erzeugt ausgangsseitig eine Information I, die die Steuereinrichtung 50 zur Erzeugung des Auslösesignals AS verarbeiten kann. Darüber hinaus arbeitet das induktive Koppelelement 56 als Energielieferant, also wie der Stromwandler 120 gemäß Figur 7, und stellt der Steuereinrichtung 50 Energie zur Verfügung, die die Steuereinrichtung 50 zum Erzeugen des Auslösesignals AS und zum Zünden der pyrotechnischen Ladung 42 der pyrotechnischen Abschalteinrichtung 40 benötigt.

Bei der Ausführungsform gemäß Figur 11 induziert ein im Leiter 31 bzw. im Strompfad 30 fließender Gleichstrom keine Spannung im induktiven Koppelelement 56, dynamische Änderungen (di/dt) im Strom induzieren jedoch eine Spannung und es kann Leistung übertragen werden. Stromänderungen durch Regelvorgänge oder Stromwelligkeit induzieren nur kleine Spannungen, diese können den Kondensator 54 aufladen, werden jedoch vom Widerstand 53 wieder abgeleitet bzw. der Kondensator 54 wird entladen. Stromänderungen durch Kurzschlussströme sind in Amplitude und di/dt wesentlich größer. Diese können den Kondensator 54 so weit aufladen, dass die Durchbruchsspannung der Zenerdiode 55 überschritten wird. Dann fließt ein Strom aus dem Kondensator 54 über die Zenerdiode 55 in die pyrotechnische Ladung 42 der pyrotechnischen Abschalteinrichtung 40. Zur Zündung sind nur kleine Ströme und Spannungen für sehr kurze Zeiten erforderlich. Die Dimensionierung der vier Bauteile 53, 54, 55 und 56 sollte so erfolgen, dass bei üblichen Regelvorgängen der Kondensator 54 nicht soweit aufgeladen wird, dass es zur Zündung kommt. Der Kurzschlussfall (>100 x Regelvorgänge) stellt in der Regel hinreichend Energie zur Zündung zur Verfügung.

Im Übrigen gelten die obigen Ausführungen im Zusammenhang mit den Figuren 1 bis 9 entsprechend.

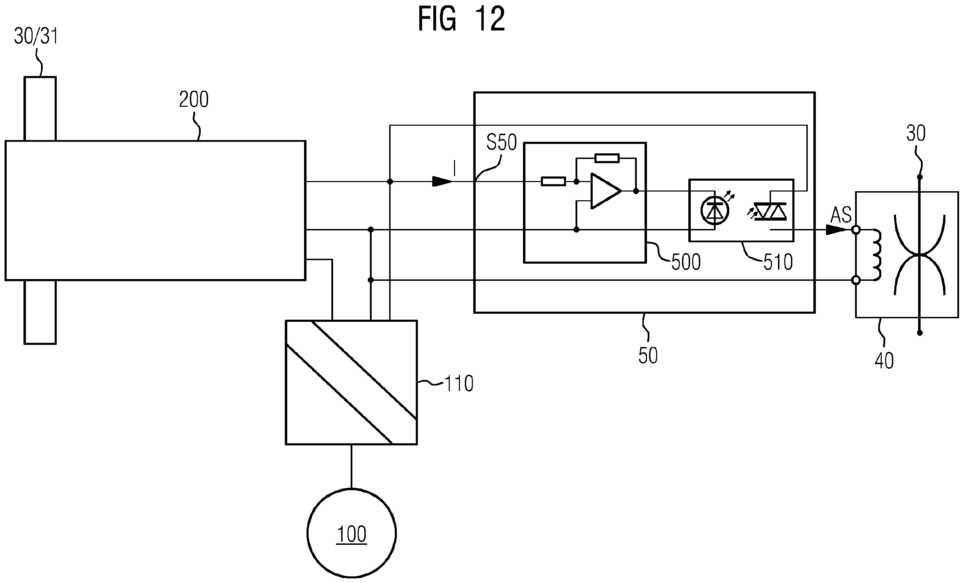

Die Figur 12 zeigt ein Ausführungsbeispiel für eine Steuereinrichtung 50, die einen Komparator 500 und ein Relais 510 umfasst. Die Steuereinrichtung 50 wird extern, beispielsweise von einem Bordnetz 100, unmittelbar oder über eine Potentialtrenneinrichtung 110, mit Energie gespeist. Die Schnittstelle S50 der Steuereinrichtung 50 ist mit einem aktiven Stromsensor 200 verbunden, der eine Information I liefert und ebenfalls von dem Bordnetz 100, unmittelbar oder über die Potentialtrenneinrichtung 110, gespeist wird. Im Übrigen gelten die obigen Ausführungen im Zusammenhang mit den Figuren 1 bis 9 entsprechend.

Im Zusammenhang mit den Figuren 2 bis 4 wurden oben Ausführungsbeispiele für pyrotechnische Abschalteinrichtungen 40, die bei der Anordnung gemäß Figur 1 eingesetzt werden können, erläutert. Im Zusammenhang mit den Figuren 5 bis 7 wurden Ausführungsbeispiele für eine elektrische Versorgung der Steuereinrichtung 50 gemäß Figur 1 erläutert. Im Zusammenhang mit den Figuren 8 und 9 wurden Ausführungsbeispiele für die Bereitstellung einer oder mehrerer Informationen I zur Prüfung der Erfüllung der Abschaltbedingung(en) erläutert. Im Zusammenhang mit den Figuren 10 bis 12 wurden verschiedene Ausführungsvarianten für die Steuereinrichtung 50 gemäß Figur 1 erläutert. Alle im Zusammenhang mit den Figuren 1 bis 12 beschriebenen Ausführungsformen sind in beliebiger Form miteinander kombinierbar, sei es hinsichtlich der Ausgestaltung der pyrotechnischen Abschalteinrichtung 40, der Versorgung der Steuereinrichtung 50 mit Energie, der Bereitstellung der Information(en) I für die Steuereinrichtung 50 sowie hinsichtlich der technischen Ausgestaltung der Steuereinrichtung 50.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 5: Schienenfahrzeug
- 10: Schienenfahrzeugkomponente
- 20: Schienenfahrzeugkomponente
- 30: Strompfad
- 31: Leitung
- 40: pyrotechnische Abschalteinrichtung
- 41: Trennelement
- 42: pyrotechnische Ladung
- 43: Hilfsmittel
- 50: Steuereinrichtung
- 51: Recheneinrichtung
- 52: Speicher
- 53: Widerstand
- 54: Kapazität
- 55: Zenerdiode
- 56: induktives Koppelelement
- 60: Leistungsschalter
- 61: Schaltelement
- 62: Trennelement
- 100: Bordnetz
- 110: Potentialtrenneinrichtung
- 120: Stromwandler
- 200: Stromsensor
- 500: Komparator
- 510: Relais

- AS: Auslösesignal
- I: Information
- I50: Schnittstelle
- Is: Strom
- SPM: Steuerprogrammmodul

## Patentansprüche

1. Schienenfahrzeug (5),
**dadurch gekennzeichnet, dass**
- das Schienenfahrzeug (5) zumindest einen mit einer pyrotechnischen Abschalteinrichtung (40) ausgestatteten und dadurch pyrotechnisch abschaltbaren elektrischen Strompfad (30) aufweist, und
- mit der pyrotechnischen Abschalteinrichtung (40) eine Steuereinrichtung (50) verbunden ist, die dazu ausgebildet ist, bei Vorliegen zumindest einer Abschaltbedingung die pyrotechnische Abschalteinrichtung (40) mit einem Auslösesignal (AS) auszulösen und den elektrischen Strompfad (30) zu unterbrechen.

2. Schienenfahrzeug (5) nach Anspruch 1,
**dadurch gekennzeichnet, dass**
die Abschalteinrichtung (40) eine Sprengsicherung ist oder umfasst, bei der durch Zündung einer pyrotechnischen Ladung (42) ein Teil des stromführenden Materials innerhalb der Sicherung so verformt wird, dass eine Unterbrechung des Strompfads (30) eintritt.

3. Schienenfahrzeug (5) nach einem der voranstehenden Ansprüche,
**dadurch gekennzeichnet, dass**
durch zumindest ein zusätzliches Hilfsmittel (43), insbesondere Silikonöl oder Borsäure, innerhalb der Abschalteinrichtung (40) ein bei Unterbrechung des Strompfads (30) entstehender Lichtbogen gelöscht wird.

4. Schienenfahrzeug (5) nach einem der voranstehenden Ansprüche,
**dadurch gekennzeichnet, dass**
der pyrotechnisch abschaltbare elektrische Strompfad (30) in einem mit Gleichspannung beaufschlagten Gleichstrompfad des Schienenfahrzeugs (5) angeordnet ist.

5. Schienenfahrzeug (5) nach einem der voranstehenden Ansprüche,
**dadurch gekennzeichnet, dass**
- die Steuereinrichtung (50) an den pyrotechnisch abschaltbaren elektrischen Strompfad (30) angekoppelt ist und diesem Energie entnimmt oder zumindest entnehmen kann und
- das Auslösesignal (AS) mit Energie erzeugt wird, die sie aus dem abschaltbaren elektrischen Strompfad (30) entnimmt.

6. Schienenfahrzeug (5) nach einem der voranstehenden Ansprüche,
**dadurch gekennzeichnet, dass**
die Steuereinrichtung (50) direkt oder über eine potentialtrennende Einrichtung (110) an eine Energiequelle, insbesondere ein elektrisches Bordnetz (100) des Schienenfahrzeugs (5), angeschlossen ist.

7. Schienenfahrzeug (5) nach einem der voranstehenden Ansprüche,
**dadurch gekennzeichnet, dass**
die Steuereinrichtung (50) ausschließlich durch elektrisch analoge Komponenten und/oder ausschließlich durch passive Komponenten gebildet ist.

8. Schienenfahrzeug (5) nach einem der voranstehenden Ansprüche 1 bis 6,
**dadurch gekennzeichnet, dass**
die Steuereinrichtung (50) eine digitale Recheneinrichtung (51) aufweist und die zumindest eine Abschaltbedingung auf digitalem Wege prüft.

9. Schienenfahrzeug (5) nach einem der voranstehenden Ansprüche,
**dadurch gekennzeichnet, dass**
das Schienenfahrzeug (5) einen elektrischen Ladungsspeicher aufweist, der über den zumindest einen pyrotechnisch abschaltbaren elektrischen Strompfad (30) mit einer anderen elektrischen Komponente des Schienenfahrzeugs (5) in Verbindung steht.

10. Schienenfahrzeug (5) nach einem der voranstehenden Ansprüche,
**dadurch gekennzeichnet, dass**
- das Schienenfahrzeug (5) einen elektrischen Stromabnehmer aufweist, der über den zumindest einen pyrotechnisch abschaltbaren elektrischen Strompfad (30) oder einen anderen pyrotechnisch abschaltbaren elektrischen Strompfad (30) mit einer anderen elektrischen Komponente des Schienenfahrzeugs (5) in Verbindung steht, und
- der zumindest eine pyrotechnisch abschaltbare elektrische Strompfad (30) elektrisch zwischen dem Stromabnehmer und der anderen Komponente angeordnet ist.

11. Schienenfahrzeug (5) nach einem der voranstehenden Ansprüche,
**dadurch gekennzeichnet, dass**
- das Schienenfahrzeug (5) ein elektrisches Bordnetz (100) aufweist und
- der zumindest eine pyrotechnisch abschaltbare elektrische Strompfad (30) oder ein anderer pyrotechnisch abschaltbarer elektrischer Strompfad (30) elektrisch zwischen dem Bordnetz (100) und einer mit dem Bordnetz (100) in Verbindung stehenden elektrischen Komponente des Schienenfahrzeugs (5) angeordnet ist.

12. Schienenfahrzeug (5) nach einem der voranstehenden Ansprüche,
**dadurch gekennzeichnet, dass**
die Steuereinrichtung (50) derart ausgestaltet ist, dass sie ein Auslösesignal (AS) zum Auslösen der pyrotechnischen Abschalteinrichtung (40) erzeugt, wenn der Strom im Strompfad (30) oder eine von dem Strom im Strompfad (30) abhängige Messgröße zumindest eine vorgegebene Auslösebedingung erfüllt.

13. Schienenfahrzeug (5) nach einem der voranstehenden Ansprüche,
**dadurch gekennzeichnet, dass**
die Steuereinrichtung (50) das Auslösesignal (AS) erzeugt, wenn
- ein den Strom im Strompfad (30) beschreibender Messwert einen vorgegebenen Schwellenwert überschreitet und/oder
- ein Integral, das durch Integrieren eines den Strom im Strompfad (30) beschreibenden Messwerts über der Zeit gebildet wird, einen vorgegebenen Schwellenwert überschreitet, und/oder
- ein Integral, das durch Integrieren des Quadrats eines den Strom im Strompfad (30) beschreibenden Messwerts über der Zeit gebildet wird, einen vorgegebenen Schwellenwert überschreitet und/oder
- wenn eine andere Vorrichtung im Schienenfahrzeug (5), z. B. ein Stromrichter, eine fehlerhafte Situation erkennt und/oder
- wenn eine berechtigte Person, z. B. der Triebfahrzeugführer innerhalb des Fahrzeugs oder ein Feuerwehrmann außerhalb des Fahrzeugs, eine fehlerhafte Situation erkennt und diese der Steuereinrichtung (50) signalisiert.
